(19) Europäisches Patentamt

European Patent Office

Office européen des brevets

(11) **EP 0 981 210 A1**

(12) **EUROPÄISCHE PATENTANMELDUNG**

(43) Veröffentlichungstag:
**23.02.2000 Patentblatt 2000/08**

(51) Int Cl.[7]: **H04B 7/08**, H04L 1/06

(21) Anmeldenummer: **98810782.7**

(22) Anmeldetag: **14.08.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ascom Systec AG**
**5506 Mägenwil (CH)**

(72) Erfinder: **Kuhn, Michael**
**66133 Saarbrücken-Scheidt (DE)**

(74) Vertreter: **Roshardt, Werner Alfred, Dipl.-Phys.**
**Keller & Partner**
**Patentanwälte AG**
**Zeughausgasse 5**
**Postfach**
**3000 Bern 7 (CH)**

(54) **Verfahren zum Empfangen und Demodulieren eines Uebertragungssignals unter Verwendung von mindestens zwei Antennen**

(57) Ein Empfänger 5 mit einer Mehrzahl von Antennen (6.1,6.2,6.3) welche einen sogenannten Antennen-Array bilden, empfängt das im Funkkanal (4) z.B. durch Mehrwegausbreitung gestörte Übertragungssignal. Die Empfangsantennen (6.1,6.2,6.3) sind an einer Combining-Schaltung (7) angeschlossen. Diese umfaßt drei Koeffizienten-Glieder (8.1,8.2,8.3), um jedes Antennen-Signal individuell mit einem Combining-Koeffizienten $c_1,c_2,c_3$, amplituden- und phasenmäßig verändern zu können. Ein Summierglied (9) summiert die gewichteten Antennen-Signale und gibt das analoge Summensignal an einen Demodulator 10 weiter. In diesem findet die Digitalisierung und die Demodulation statt.

Ein Realwert-MMSE-Rechner (11) berechnet die optimalen Combining-Koeffizienten $c_1,c_2,c_3$, indem der Realwert des mittleren quadratischen Fehlers minimiert wird. Der Wert $k_{opt}$ ist so gewählt, dass die Stützwerte der Kanalstoss-Antworten an der Stelle $k_{opt}$ über alle Antennen gemittelt ein Maximum der Energie aufweisen.

Fig.1

**Beschreibung**

**Technisches Gebiet**

Die Erfindung betrifft ein Verfahren zum Empfangen und Demodulieren eines Übertragungssignals unter Verwendung von mindestens zwei Antennen, wobei die Empfangssignale der Antennen durch Combining-Koeffizienten gewichtet und addiert werden, um danach das Summensignal zu demodulieren.

**Stand der Technik**

Funkkanäle mit Mehrwegausbreitung führen bei hohen Datenraten zu ausgeprägter Intersymbol Interferenz (ISI). Dieses Problem ist z.B. auch bei der digitalen Kommunikation auf der Basis des HIPERLAN Standards vorhanden. Dabei werden Daten mit einer Rate von 23.5 Mbps (Mega Bit pro Sekunde) lokal zwischen Computern übertragen. Die Trägerfrequenz liegt im Bereich von 5.1 bis 5.3 GHz.

Die Leistungsfähigkeit des Systems hängt von der Fähigkeit des Empfängers ab, die ISI zu kompensieren und damit die Fehlerrate zu minimieren. Eine Möglichkeit besteht darin, auf digitaler Ebene eine genaue Schätzung der Kanalstoss-Antwort zu ermitteln. Eine leistungsfähige digitale Kanalentzerrung bedingt jedoch einen hohen Rechenaufwand und einen entsprechend hohen Stromverbrauch im Empfänger.

Es wurde deshalb schon vorgeschlagen, den Empfänger mit einer Mehrzahl von Antennen auszurüsten (engl. Antenna Diversity) und diejenige Antenne mit dem stärksten Signal für den Empfang zu verwenden. Bekannt ist auch das gewichtete Kombinieren der verschiedenen Antennensignale nach der Massgabe, dass das resultierende Signal eine grösstmögliche Leistung hat. Zu diesem Zweck weist der Empfänger ein einstellbares analoges Summiernetzwerk (Combiner) auf, mit welchem die einzelnen Antennensignale vor dem Addieren in Betrag und Phase verändert werden können. Die entsprechenden Koeffizienten werden zuvor digital berechnet mit einem Fuzzy-logic Algorithmus. Der Vorteil dieser Empfängerstruktur besteht darin, dass wegen der hochfrequenten (analogen) Addition der Signale nur ein einziger Demodulator und Entzerrer notwendig ist. Dies wirkt sich vorteilhaft auf die Produktionskosten auf.

Die bekannten Verfahren erlauben zwar eine Verbesserung der Empfangsqualität, ob diese aber in die Nähe eines theoretischen Optimums kommt, kann nicht gesagt werden.

**Darstellung der Erfindung**

Aufgabe der Erfindung ist es, ein Verfahren der eingangs genannten Art anzugeben, welches eine bestmögliche Auswertung der Empfangssignale bei relativ kleinem Rechenaufwand erlaubt.

Die Lösung der Aufgabe ist durch die Merkmale des Anspruchs 1 definiert. Gemäss der Erfindung besteht die Lösung darin, dass die Combining Koeffizienten so festgelegt werden, dass allein der Realteil des Fehlers zwischen dem Empfangssignal und einem zulässigen Symbolwert nach dem MMSE-Kriterium optimiert ist.

Im Unterschied zu einer konventionellen Fuzzy-Logic Methode zur Bestimmung der Combining-Koeffizienten verwendet die Erfindung ein Kriterium, welches an sich zur bestmöglichen Wahl der Koeffizienten führt und nicht Gefahr läuft, auf einem lokalen statt globalen Optimum zu landen. Ein wesentlicher Aspekt ist zudem die Beschränkung der Optimierung auf den Realteil des (komplexwertigen) Fehlers. Es hat sich gezeigt, dass trotz des markant reduzierten Rechenaufwandes die Performance fast unverändert hoch ist.

Das Verfahren eignet sich insbesondere für QAM- und für GMSK- Signale. Die Combining-Koeffizienten werden dann mit Vorteil nach den weiter unten angegebenen Formeln (III) berechnet.

Um den Rechenaufwand zum Bestimmen des optimalen Taps der Kanalstoss-Antworten zu reduzieren, wird vorzugsweise dasjenige Tap ausgewählt, welches über die verschiedenen Kanäle gemittelt eine maximale Energie aufweist.

Die schaltungstechnische Umsetzung des Verfahrens ist ohne Schwierigkeiten möglich (z. B. mit einem anwendungsspezifischen Schaltkreis ASIC oder einem programmierbaren Prozessor).

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1      ein auf das Wesentliche vereinfachte Blockschaltbild eines Senders und eines Empfängers;

Fig. 2      ein zeitdiskretes Modell der Erfindung in der Basisband Darstellung;

Fig. 3    eine Darstellung der Performance der erfindungsgemäßen Methode in der Gegenüberstellung zu einer komplexwertigen MMSE-Methode

Fig. 4    eine Gegenüberstellung der Performance des erfindungsgemäßen Verfahrens mit optimalem und mit suboptimalem k-Wert.

**Wege zur Ausführung der Erfindung**

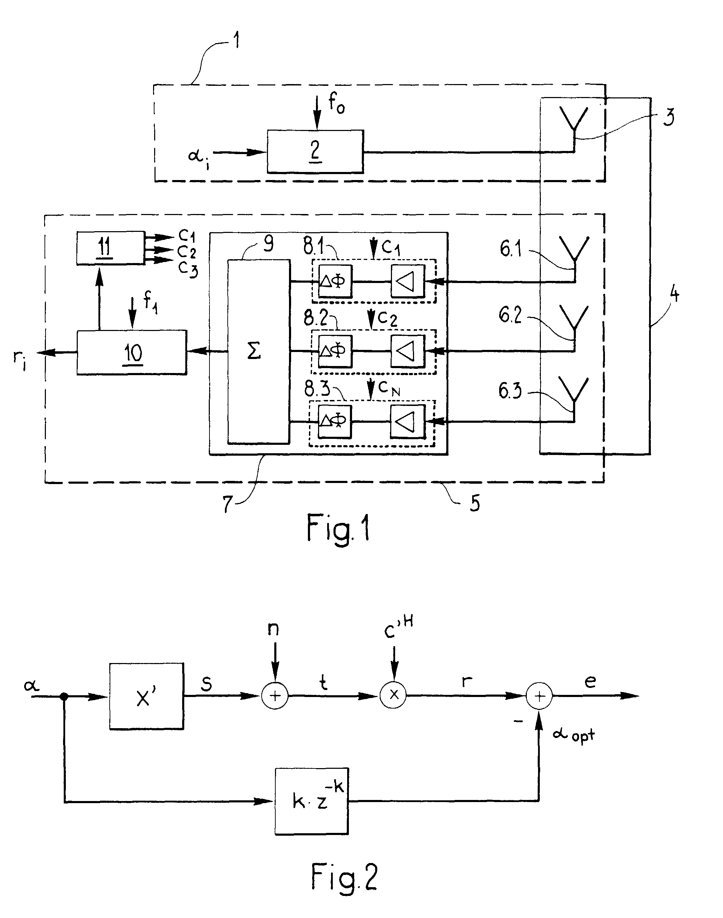

Fig. 1 zeigt ein grobes Blockschaltbild der Sender/Empfänger-Anordnung. In einem Sender 1 werden Daten-Symbole $\alpha_i$ mit einem Modulator 2 einer Trägerschwingung $f_0$ aufmoduliert und über eine Antenne 3 abgestrahlt. Ein Empfänger 5 mit zum Beispiel drei gleichen Antennen 6.1, 6.2, 6.3, welche einen sogenannten Antennen-Array bilden, empfängt das im Funkkanal 4 z. B. durch Mehrwegausbreitung gestörte Übertragungssignal. Die Empfangsantennen 6.1, 6.2, 6.3 sind an einer Combining-Schaltung 7 angeschlossen. Diese umfaßt drei Koeffizienten-Glieder 8.1, 8.2, 8.3, um jedes Antennen-Signal individuell mit einem Combining-Koeffizienten $c_1$, $c_2$, $c_3$, amplituden- und phasenmäßig verändern zu können. Ein Summierglied 9 summiert die gewichteten Antennen-Signale und gibt das analoge Summensignal an einen Modulator 10 weiter. In diesem findet die Digitalisierung und die Demodulation statt.

In der vereinfachten Darstellung der Fig. 1 wird davon ausgegangen, daß der Demodulator 10 auch eine Schaltung zum Ermitteln der Kanalstoss-Antwort $h_{ges,1}$, $h_{ges,2}$, $h_{ges,3}$, zu jeder Empfangsantenne 6.1, 6.2, 6.3 aufweist. Zu diesem Zweck verfügt das Übertragungssignal über eine Trainingssequenz. In einer dem Empfang der Daten vorgelagerten Trainingsphase wird jeweils eine Antenne auf Empfang geschaltet und der Kanal ausgemessen. Auf der Basis der drei Kanalstoss-Antworten kann ein erfindungsgemäßer Realwert-MMSE-Rechner 11 die optimalen Combining-Koeffizienten $c_1$, $c_2$, $c_3$, für den Empfang und die Demodulation der Daten-Signale ermitteln.

Die Erfindung wird im folgenden anhand eines GMSK-modulierten Signals erläutert. Die mathematischen Gleichungen beziehen sich auf die Basisband-Darstellung.

Die nicht-lineare GMSK-Modulation kann durch die QAM-Modulation angenähert werden. Sendefilter, Funkkanal und Empfangsfilter werden zu einem einzigen Filter **X** zusammengefasst. Die an sich komplexwertigen Datensymbole werden durch realwertige Eingangssymbole $\alpha$ mit einer Phasendrehung $j^i$ dargestellt. Die Berechnungen im Empfänger zur Bestimmung der Combining-Koeffizienten basieren auf Abtastwerten in einem vorgegebenen zeitlichen Abstand T.

Das Ausgangssignal des Combiners stellt sich wie folgt dar:

$$\text{(I)} \qquad r_t = \left( \sum_{l=1}^{N} \left( \sum_{k} x_{l,L-k} \cdot \alpha_{t-L+k+1} \cdot j^{t-L+k+1} + n_l \right) \cdot c_l \right) \cdot (-j)^t .$$

Die Werte $x_{1,1}$, ..., $x_{N,L}$ bezeichnen die jeweils L Stützwerte der Kanalstoss-Antworten zu den verschiedenen Antennen 1, ..., N.

Die Combiner-Koeffizienten $c_1$, .. , $c_N$ werden so bestimmt, dass der Realteil des quadratischen Fehlers minimal wird.

$$\text{(II)} \qquad f_c = e_R{}^2 = (\text{Re}\{r\text{-}\alpha_{opt}\})^2$$

Fig. 2 zeigt das entsprechende Diagramm in der Matrix-Darstellung. Mit $\alpha_{opt}$ wird ein (noch zu bestimmendes) optimales Eingangssymbols (d. h. ein Eingangssymbol mit der optimal gewählten Verzögerung $k_{opt}$) bezeichnet. Wird der Erwartungswert $f_c$ des Fehlers e in Abhängigkeit von den Combining-Koeffizienten minimiert, ergibt sich folgendes:

$$\text{(III)} \quad c' = -[E^*D^{*-1}D + E]^{-1} \cdot [2jg_I - 2E^{*'}D^{*-1}g_R] \equiv c'^{Re}_{opt}$$

$$A = X' \cdot X'^T$$

$$B = X' \cdot X'^H + \Lambda_{nn} = X' \cdot X'^H + I \cdot \sigma_n^2$$

$$g = 2 \cdot X'[:, k_{opt}] \text{ mit } g_R = \text{Re}\{g\}, g_I = \text{Im}\{g\}$$

$$D = A^* + B$$

$$E = A^* - B$$

$$\mathbf{X}' = \begin{pmatrix} \cdots & h_{ges,1}(-i \cdot T) & \cdots \\ \cdots & h_{ges,2}(-i \cdot T) & \cdots \\ & \vdots & \\ \cdots & h_{ges,N}(-i \cdot T) & \cdots \end{pmatrix} \text{ und } \mathbf{c}' = \begin{pmatrix} c_1 \\ c_2 \\ \vdots \\ c_N \end{pmatrix}$$

$X'[:, k_{opt}]$ bezeichnet die Spalte $k_{opt}$ der Matrix.

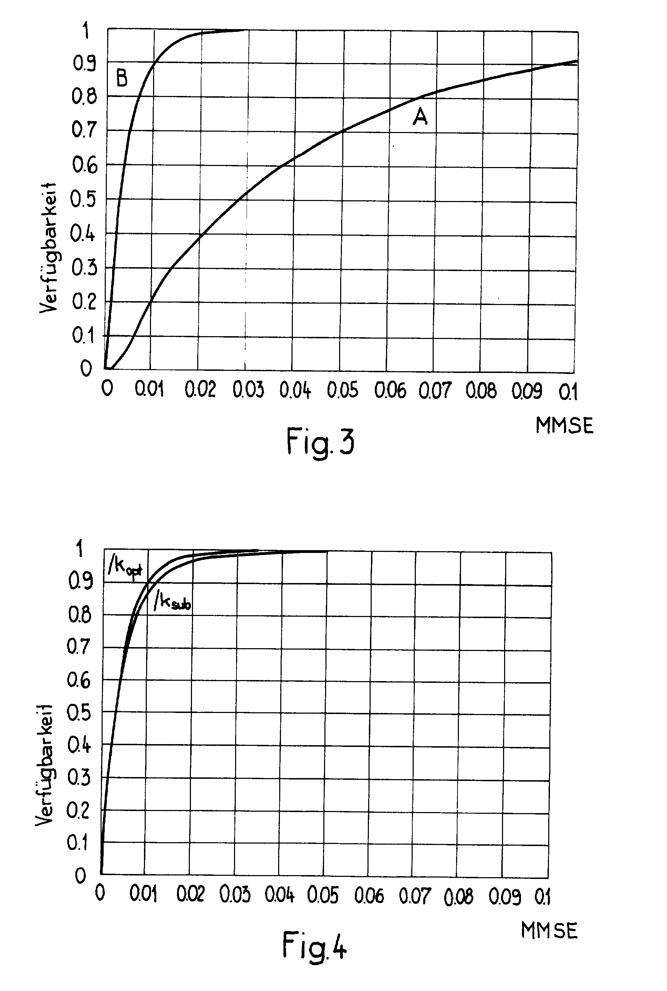

Fig. 3 zeigt eine Gegenüberstellung der erfindungsgemäßen Realwert-MMSE-Methode und der komplexwertigen MMSE Methode mit Betragsoptimierung. Auf der Abszisse ist der mittlere quadratische Fehler und auf der Ordinate die Häufigkeit eines unter dem jeweiligen MMSE-Wert liegenden quadratischen Fehlers aufgetragen (Verfügbarkeit).

Werden die Combining-Koeffizienten durch Optimierung des Betrags des komplexwertigen Fehlers berechnet, resultiert die Kurve A. Wird dagegen nur der Realteil des Fehlers minimiert, ergibt sich die viel bessere Kurve B.

Damit nicht eine aufwendige Variation über alle möglichen k ($1 \leq k \leq L$) durchgeführt werden muss, wird $k_{opt}$ gemäß einer besonders bevorzugten Ausführungsform so gewählt, dass die über alle Antennen gemittelte Energie des Stützwertes mit der Position $k_{opt}$ maximal ist:

$$(IV) \qquad \sum_{l=1}^{N} \left| X'\left[l, k_{opt}\right] \right|^2 \geq \sum_{l=1}^{N} \left| X'[l, m] \right|^2, \, m = 1 \ldots L$$

Wie Fig. 4 zeigt, wird die Performance des Empfängers dadurch nur unwesentlich verringert. (Auf der Abszisse ist wiederum der mittlere quadratische Fehler und aus der Ordinate die Verfügbarkeit bzw. Häufigkeit des Fehlers unter einer vorgegebenen Schwelle angegeben. $k_{opt}$ zeigt die Performance bei optimaler Wahl und $k_{sub}$ bei suboptimaler Wahl.) Der Rechenaufwand sinkt jedoch markant (etwa um den Faktor 5).

Zusammenfassend ist festzustellen, dass eine wesentliche Verbesserung der Empfangsqualität eines Empfängers mit einer Mehrzahl von Antennen erreicht werden kann, wenn die verschiedenen Antennensignale durch Koeffizienten gewichtet und dann summiert werden, welche nur den Realteil des mittleren quadratischen Fehlers minimieren. Um den Aufwand der Bestimmung des optimalen Stützwertes der Kanalstoss-Antwort zu minimieren, wird vorzugsweise derjenige Stützwert verwendet, bei welchem über alle Antennen gemittelt ein Maximum auftritt. Das erfindungsgemäße Verfahren eignet sich insbesondere für Signalübertragungsverfahren, welche eine eindimensionale Symbolkonstellation aufweisen oder eine zweidimensionale Konstellation, die sich durch Transformation in eine eindimensionale überführen läßt.

**Patentansprüche**

1. Verfahren zum Empfangen und Demodulieren eines Übertragungssignals unter Verwendung von mindestens zwei Antennen, wobei die Empfangssignale der Antennen durch Combining-Koeffizienten gewichtet und addiert werden, um danach das Summensignal zu Demodulieren, dadurch gekennzeichnet, dass die Combining Koeffizienten so festgelegt werden, dass allein ein Realteil eines Fehlers zwischen dem Summensignal und einem zulässigen Symbolwert nach dem MMSE-Kriterium optimiert ist.

2. Verfahren nach Anspruch 1, dadurch gekennzeichnet, dass das Summensignal nach einem GMSK- oder QAM-Verfahren demoduliert wird und dass die Combining-Koeffizienten im wesentlichen wie folgt berechnet werden:

$$c' = -[E^*D^{*-1}D+E]^{-1} \cdot [2jg_I - 2E^*D^{*-1}g_R] \equiv c'^{Re}_{opt}$$

$$A = X' \cdot X'^T$$

$$B = X' \cdot X'^H + \Lambda_{nn} = X' \cdot X'^H + I \cdot \sigma_n^2$$

$$g = 2 \cdot X'[:,k_{opt}] \text{ mit } g_R = \text{Re}\{g\}, \; g_I = \text{Im}\{g\}$$

$$D = A^* + B$$

$$E = A^* - B$$

$$\mathbf{X}' = \begin{pmatrix} \cdots & h_{ges,1}(-i \cdot T) & \cdots \\ \cdots & h_{ges,2}(-i \cdot T) & \cdots \\ & \vdots & \\ \cdots & h_{ges,N}(-i \cdot T) & \cdots \end{pmatrix} \quad \text{und} \quad \mathbf{c}' = \begin{pmatrix} c_1 \\ c_2 \\ \vdots \\ c_N \end{pmatrix}$$

**3.** Verfahren nach Anspruch 2, dadurch gekennzeichnet, dass der Wert $k_{opt}$ so gewählt wird, dass die Stützwerte der Stoss-Antworten an der Stelle $k_{opt}$ über alle Antennen gemittelt ein Maximum der Energie aufweisen.

**4.** Schaltungsanordnung für einen Empfänger mit mehreren Antennen zum Empfangen eines Übertragungssignals und mit einem Netzwerk zum Gewichten und Summieren der Empfangssignale der verschiedenen Antennen in Abhängigkeit von einstellbaren Combining-Koeffizienten, gekennzeichnet durch eine Rechenschaltung, welche die Combining Koeffizienten so festlegt, dass allein ein Realteil eines Fehlers zwischen dem Summensignal und einem zulässigen Symbolwert nach dem MMSE-Kriterium optimiert ist.

**5.** Schaltungsanordnung nach Anspruch 4, dadurch gekennzeichnet, dass eine Funktionseinheit zum Schätzen der Kanalstoss-Antworten zu den verschiedenen Antennen vorgesehen ist, dass eine Funktionseinheit zum Demodulieren des Summensignals nach einem GMSK- oder QAM-Verfahren vorgesehen ist und dass die Rechenschaltung so ausgebildet ist, dass die Combining-Koeffizienten im Wesentlichen wie folgt berechnet werden:

$$c' = -[E^*D^{*-1}D+E]^{-1} \cdot [2jg_I - 2E^*D^{*-1}g_R] \equiv c'^{Re}_{opt}$$

$$A = X' \cdot X'^T$$

$$B = X' \cdot X'^H + \Lambda_{nn} = X' \cdot X'^H + I \cdot \sigma_n^2$$

$$g = 2 \cdot X'[:,k_{opt}] \text{ mit } g_R = \text{Re}\{g\}, g_I = \text{Im}\{g\}$$

$$D = A^* + B$$

$$E = A^* - B$$

$$\mathbf{X'} = \begin{pmatrix} \cdots & h_{ges,1}(-i \cdot T) & \cdots \\ \cdots & h_{ges,2}(-i \cdot T) & \cdots \\ & \vdots & \\ \cdots & h_{ges,N}(-i \cdot T) & \cdots \end{pmatrix} \text{ und } \mathbf{c'} = \begin{pmatrix} c_1 \\ c_2 \\ \vdots \\ c_N \end{pmatrix}$$

Fig. 1

Fig. 2

Fig. 3

Fig. 4

Europäisches
Patentamt

**EUROPÄISCHER RECHERCHENBERICHT**

Nummer der Anmeldung

EP 98 81 0782

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int.Cl.6) |
|---|---|---|---|
| X | CLARK M V ET AL: "MMSE DIVERSITY COMBINING FOR WIDE-BAND DIGITAL CELLULAR RADIO" IEEE TRANSACTIONS ON COMMUNICATIONS, Bd. 40, Nr. 6, 1. Juni 1992, Seiten 1128-1135, XP000291546 * Seite 1130, linke Spalte, Zeile 6 – Seite 1132, rechte Spalte, Zeile 12 * | 1-5 | H04B7/08 H04L1/06 |
| A | HIROSHI SUZUKI: "SIGNAL TRANSMISSION CHARACTERISTICS OF DIVERSITY RECEPTION WITH LEAST-SQUARES COMBINING-RELATIONSHIP BETWEEN DESIRED SIGNAL COMBINING AND INTERFERENCE CANCELING" ELECTRONICS & COMMUNICATIONS IN JAPAN, PART I - COMMUNICATIONS, Bd. 76, Nr. 11, 1. November 1993, Seiten 80-93, XP000460165 * Seite 81, rechte Spalte, Zeile 14 – Seite 82, rechte Spalte, Zeile 30 * | 1,4 | |

RECHERCHIERTE
SACHGEBIETE (Int.Cl.6)

H04B
H04L

Der vorliegende Recherchenbericht wurde für alle Patentansprüche erstellt

| Recherchenort | Abschlußdatum der Recherche | Prüfer |
|---|---|---|
| MÜNCHEN | 15. Dezember 1998 | Burghardt, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)